# EUROPEAN PATENT APPLICATION

(11) **EP 1 447 685 A2**
(43) Date of publication of application: **18.08.2004**
(21) Application number: 04003000.9
(22) Date of filing: 11.02.2004
(51) Int. Cl.: G01V 3/10

(54) **Flux control system for metal detectors**

(30) Priority: 12.02.2003 US 446747 P; 11.12.2003 US 733919 P
(71) Applicant: Thermo Ramsey Corporation, Minneapolis, Minnesota 55433 (US)
(72) Inventor: Britton, Andrew Michael, DE13 OXZ Staffordshire (GB)
(74) Representative: Trupiano, Federica

(57) **Abstract**

A metal detector (1) used for identifying contaminants in products. The detector (1) includes an oscillator coil (10) that may be formed as two series wound coils (34, 35) having relatively smaller dimensions or as two parallel wound coils (29, 30) having relatively larger dimensions. A pair of input coils (13, 14) is located adjacent to the oscillator coil (10). A first signal (8) is generated by the first input coil (13) in response to the presence of a metallic object, while a second signal (24) is generated by the second input coil (14) in response to the presence of a metallic object. By measuring the ratio of the first signal (8) to the second signal (24) the physical location of a metal object within the metal detector cavity (7) can be determined.

## Description

The present application claims priority from United States Provisional Patent Application No. 60/446,747, filed on February 12, 2003 and United States Patent Application filed on December 11, 2003.

### BACKGROUND OF THE INVENTION

### 1. Field of Invention

This invention pertains generally to the field of metal detection, and more particularly to controlling the shape of the magnetic field used in such a device.

### 2. Description of Prior Art

Metal detectors are used in the food processing industry, for example, to detect contaminants within a product. The unwanted material may include very small metallic particles having differing compositions. The typical metal detector is housed in an enclosure containing a longitudinal aperture through which the product under test is transported, usually by means of a conveyor belt. The metal detector includes a transducer or oscillator that radiates a magnetic field by means of some arrangement of coils.

In particular, the typical metal detector includes a search head which contains both radiating and receiving coils, the search head being formed to include the aperture or passageway through which the product travels. The oscillator coil is a wire loop residing within the search head. The oscillator coil surrounds the aperture and receives stimulus from an oscillator circuit. The search head also includes an input coil connected so as to produce a zero or balanced input signal when no metal is present. A disturbance in the radiated magnetic field is sensed by the input coil and processed in some manner in order to discern the presence of metal within the product passing through the detector enclosure. A nonzero input signal as measured across the input coil is due to either mechanical imbalances in the construction of the search head, inherent electrical changes in the circuitry (such as frequency drift), metal being introduced into the aperture, or the effect of the product itself.

Modern digital signal processing techniques resolve the input signal into two signal components, one component being resistive and the other signal component being reactive. The "product effect" caused by the product passing through the aperture is due primarily to electrical conduction via salt water within the product, the electrical conduction causing large magnitude resistive signals and relatively smaller reactive signals.

When a metal detector is used in the food processing industry, the detector is typically placed in a location which is a part of the existing food processing line. Due to constraints in processing the food items, there is often little discretion in choosing where the detector will reside. The detector is often placed in close proximity to other metal objects, such as conduits, casings, cabinets and other metal fixtures. Equipment, such as pumps and conveyors can vibrate or move with respect to the fixed position of the metal detector. The magnitude of the effect of such equipment on the metal detector is dependent on the size of the detector aperture, the operating frequency, the magnitude of the operating current, the size and location of the surrounding equipment (including other metal detectors that are operating at the same frequency),the type of material being tested and the magnitude and frequency of any vibration or movement. In many situations, the magnitude of external interference is sufficient to cause the metal detector to falsely indicate the presence of metal in the product under test.

In order to provide some measure of electromagnetic shielding, the detector enclosure is usually constructed of metal, but this typically requires that the coils be separated some distance from the walls of the metal enclosure in order to minimize the effects caused by enclosure vibration, heating and aging. Vibration caused by relative movement of the enclosure with respect to the coils causes a disturbance in the radiated electromagnetic field that may easily be mistaken as the sensing of contaminant metal. The magnitude of a vibration related disturbance increases as the distance between the coils and the metallic enclosure walls is reduced. In general, any metal residing within or near the detection aperture is likely to be sensed as a contaminant particle or object even when the metal is part of the detector structure or enclosure. A method of canceling or accounting for such residual or nearby metal is a major challenge affecting the design of metal detection equipment.

Within the metal detector aperture is an area which may be properly termed as the detection zone. The detection zone is a region in which the product is subjected to the peak magnetic radiation of the oscillator coil and any disturbance in the magnetic field is assumed to be attributable to the presence of unwanted metal contaminants. Unfortunately, since the magnetic field extends beyond the detection zone, there is an additional region in which no metal should reside, typically referred to as the "metal free zone". In real world metal detector installations, the desired metal free zone is often several times larger than the volume of the detector aperture. Achieving such a substantial metal free zone often creates problems in a food processing or other production environment.

One method of reducing the volume of the metal free zone is to reduce the physical boundaries or extent of the magnetic field produced by the oscillator coil. An example of a device which employs this technique is disclosed in United States Patent No. 5,572,121, entitled METAL DETECTOR INCLUDING A METAL SCREENING FOR PRODUCING A SECONDARY MAGNETIC FIELD TO REDUCE THE METAL FREE ZONE, issued on November 5, 1996 to Beswick. The Beswick device places a metal screen or grid adjacent to the oscillator coil. The metal screen induces a secondary magnetic field which is in opposition to the primary magnetic field, thereby constricting the size of the primary magnetic field and the volume of the metal free zone. The Beswick device functions only when the screens or plates form a continuous shield around the inside of the aperture, that is, when the starting and ending edges of the screen are electrically connected.

Despite past improvements, a need exists to further address the problems inherent in state of the art metal detection equipment, including the effects due to vibration and the problems caused by an enlarged metal free zone in the region adjacent to the aperture.

### SUMMARY OF THE INVENTION

The current invention relates to improvements in the function of a metal detector. In particular, the present invention increases the immunity of a metal detector to vibration, as well as to the movement of metal in regions adjacent to the search head aperture, by monitoring the ratio of the signal amplitudes induced in the windings of the input coils.

The movement of metal in the metal free zone has the same characteristic input signal traits as metal moving due to vibration of the metal case which serves as the detector enclosure. In either case they are metal objects moving within the metal free zone. By recognizing and removing signals associated with vibration, the present invention permits the use of greater sensitivity in the processing of signals. The volume of the required metal free zone is reduced because the ability to remove signals associated with case vibration also permits the removal of the similarly characterized signals that are associated with the movement of metal adjacent to the aperture.

The present invention also includes a technique for improving the magnetic flux associated with the use of relatively large search heads. When using a large search head, the inductance of the oscillator coil is large due to the greater size. The inductive reactance X_{L} of the oscillator coil is therefore larger, being equal to 2πfL, where f is the frequency of operation and L is the inductance of the coil. According to Ohm's law, for a given excitation voltage applied to the oscillator coil, the larger reactance will cause a relatively smaller current to flow through the coil. Since magnetic flux is directly related to the magnitude of the current, a large search head will produce a smaller magnetic flux density in the center of the aperture. One embodiment of the present invention uses two oscillator coils connected in a parallel relationship to generate up to twice the magnetic flux density for a given excitation voltage whenever a relatively larger search head is required.

In the case of a small search head, the inductance is necessarily smaller due to the smaller size. In this circumstance, a given voltage will result in a relatively high current. The current is typically so high, in fact, that the voltage must be reduced to prevent the coil current from exceeding a value that would cause signal distortion, thereby raising the background noise level and hence reducing detector performance. An alternate embodiment of the present invention uses two oscillator coils interconnected in a series relationship so as to produce approximately twice the magnetic flux density for a given excitation voltage whenever a relatively smaller search head is required.

The present invention includes an input coil formed as two coils that are coaxial with the oscillator coil. The resultant three-coil arrangement is connected such that a zero net input voltage is produced under quiescent conditions. The present invention also includes a technique for improving the magnetic flux by the addition of a flux concentrator in the form of at least one ferrite slab or sheet positioned adjacent to the coils increasing the inductance of the oscillator coil, thereby increasing the magnetic flux for a given coil current.

The oscillator coil inductance increase produced by the flux concentrator is not needed in some regions of the search head, most specifically in the corners of the aperture. The contribution derived from the oscillator coil corners to the flux density in the center of the aperture, where the product under test resides, is small. By reducing the inductance in the corners where it is not needed, the net inductance of the coil remains the same. This maximizes magnetic flux where it is most useful, that is, displaced from the aperture corners. Since the net inductance is substantially the same, substantially the same oscillator current will flow. If this was not the case then the effect of adding the flux concentrators would be reduced because the current magnitude would be smaller.

All of the techniques of the present invention together produce cumulative improvements in the resultant metal detecting apparatus. For example, the use of a series coil arrangement in conjunction with a relatively smaller search head, when combined with a flux concentrator, can reduce the size of the smallest detectable contaminant. Typically this means that a detector previously capable of detecting a particle having a diameter of 0.8 mm will be able to detect a particle having a diameter of 0.6 mm. The ability to ignore the effects of case vibration permits greater sensitivity. This further reduces the diameter of detectable contaminants from 0.8 mm to approximately 0.4 mm.

### BRIEF DESCRIPTION OF THE DRAWINGS

FIG. 1 is a perspective view of a metal detector constructed according to the principles of the present invention;
FIG. 2 is a graph depicting the relationship between components of the input signal produced by the metal detector of Figure 1;
FIG. 3 is a graph depicting the relationship between induced voltages in the input coils of the metal detector of Figure 1;
FIG. 4 is a simplified perspective view of the oscillator coils utilized in a first embodiment of the present invention;
Figure 5 is a simplified perspective view of the oscillator coils utilized in a second embodiment of the present invention; and
Figure 6 is a simplified perspective view of the aperture and flux concentrator utilized in the metal detector of Figure 1.

### DETAILED DESCRIPTION OF THE PREFERRED EMBODIMENTS

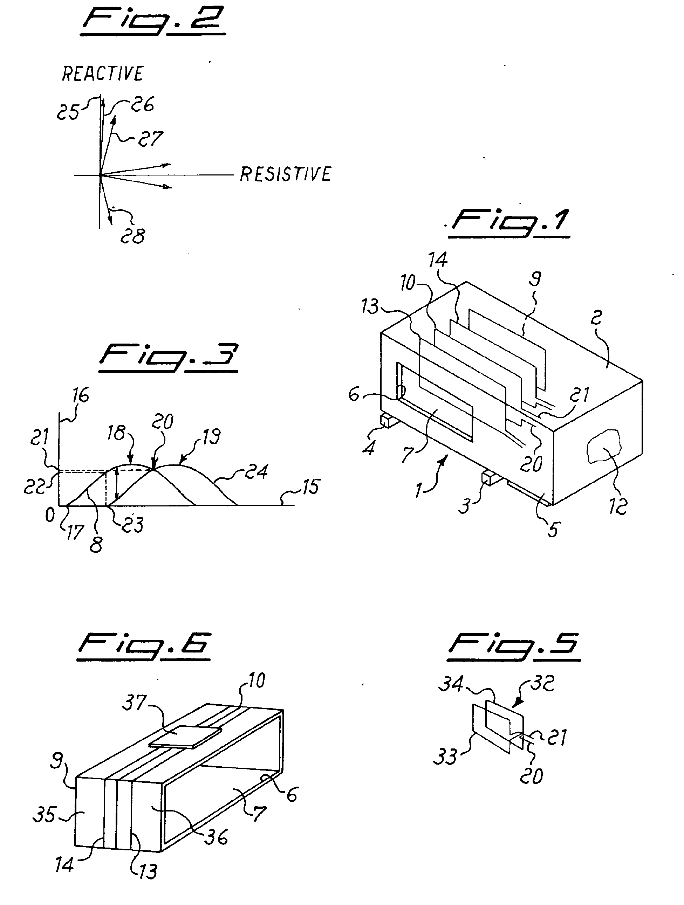

Referring to FIG.1, a metal detector constructed according to the principles of the present invention is shown generally at 1. The metal detector includes a metal or conductive cabinet. The metal detector 1 includes a metal or conductive cabinet 2, typically stainless steel or aluminum that is supported by shock absorbing feet 3 and 4. The cabinet is formed to include a generally rectangular first sidewall 5. The sidewall 5 includes an opening or first aperture 6 which permits access to the interior volume of cavity 7. The cavity 7 is bounded by a coaxially aligned second aperture 9, such that an article (not shown) may enter the cavity 7 through first aperture 6 and exit cavity 7 through the second aperture 9. The article may enter the cavity 7 via a conveyor, which may be a belt or chain as well as a gravity feed mechanism or a pump forwarding the article through a conduit. In an alternate embodiment (not shown) the aperture may have a circular shape, and the entire cabinet may also be generally circular or toroidal in configuration. Further, the aperture may be of the so-called "single sider" type commonly used, for example, in the carpet industry, where the metal detector has a single sensitive side or face in which all of the coils are embedded.

An oscillator coil 10 resides within cabinet 2. The oscillator coil 10 surrounds and substantially bifurcates the cavity 7. As seen in FIG. 10, the oscillator coil 10 is excited or driven by the oscillator or transmitter 11, which is housed within the region 12 of cabinet 2. Symmetrically spaced on opposite sides of oscillator coil 10 is a front input coil 13 and a rear input coil 14. Coils 13 and 14 are connected to each other in series opposition.

The oscillator 11 produces a low frequency magnetic signal typically in the range of thirty kilohertz to two megahertz. The oscillator 11 is coupled to the oscillator coil 10 through leads 20 and 21. The oscillator coil 10 acts as an antenna, radiating the signal produced by oscillator 11 and producing a magnetic field within and somewhat beyond cavity 7. The input coils 13 and 14 reside within the magnetic field produced by oscillator coil 10. In the absence of metal, and due to their series opposition interconnection, the signal induced in the front coil 13 from oscillator coil 10 is of the same magnitude but opposite polarity as the signal induced in the rear coil 14, thereby producing a resultant signal of zero volts. when metal is present, or due to small irregularities in the position of coils 13 and 14, or the location of the case 2, or the presence of contaminant metal, it distorts the symmetry of the magnetic field produced by oscillator coil 10, thereby causing signals of different magnitude to appear on coils 13 and 14. This imbalance produces a signal having a magnitude that is greater than zero volts.

The strength of the signal produced by the input coils 13 and 14 is a function of the size, shape and composition of the coils 13 and 14, the absolute strength of the magnetic field produced by oscillator coil 10, the size of the metal object (not shown), the composition of the metal object, the distance between the metal object and the input coils 13 and 14, and the distance of the metal object from the oscillator coil 10. The closer the metal object is to the oscillator coil 10, the greater will be the distortion of the magnetic field transmitted by oscillator coil 10. A relatively greater field distortion on one input coil produces a relatively greater unbalance in the signals induced in input coils 13 and 14. Similarly, the closer the metal object is to either receiver coil 13 or 14, the greater the imbalance in the amount of signal induced in either coil. Thus, a greater distance between the metal object and any of the coils reduces the magnitude of the unbalanced signal. Typically, the input coils 13 and 14 are arranged and spaced in such a manner so as to maximize the magnitude of the unbalanced signal when the metal object is passed through the center of the cavity 7.

The oscillator 11 operates at a discrete, continuous wave radio frequency typically in the range of 0.030 to 2.00 megahertz. The magnetic field emitted by oscillator coil 10 is coupled to the adjacent input coils 13 and 14 by magnetic induction creating signals in both. Since the coils 13 and 14 are wired in series opposition, there is no resultant output signal when metal (or other electromagnetic field distorting medium) is absent from the vicinity of the emitted magnetic field.

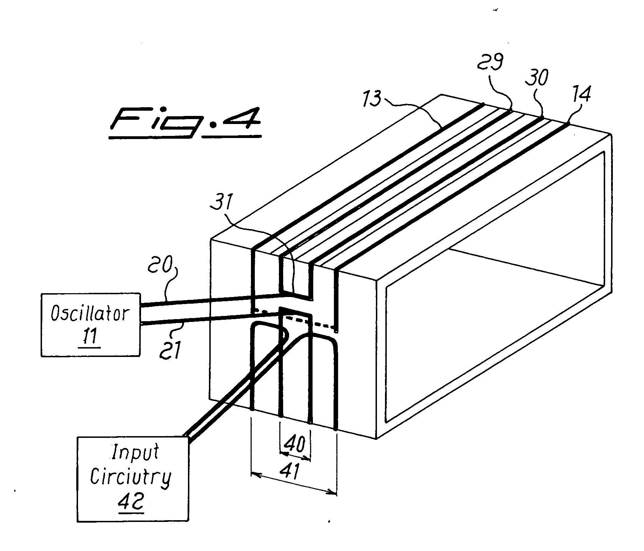

Referring also to Figure 3, when a moving metal article is brought into proximity with the radiated magnetic field of oscillator coil 10, the magnetic field effectively undergoes amplitude and phase modulation, that is, the magnetic field density varies with respect to time. The modulation frequency is typically in the range of 0.10 to 100 hertz. The actual frequency is dependent on the speed of the metal (or product) passing through the aperture as well as the coil separation.

The signal 8 received by coil 13, for example, will have an amplitude and an amplitude modulation frequency that is dependent on the metal (or product being tested) characteristics as well as the velocity of the metal as it passes through the detector cavity 7. The waveform 8 depicts the change in voltage across the input coil 13 when metal passes by the coil. In fact the change in voltage is of the order of a few tens of nanovolts (for a small contaminant) superimposed on a standing voltage of up to ten volts. The standing voltage is the same on each coil 13 and 14. By wiring the coils 13 and 14 in an anti-phase relationship, the relatively large standing voltage is removed. The axis 16 represents the magnitude or amplitude of the signal 8 in units such as volts, while axis 15 represents the distance traveled or horizontal displacement of the metal contaminant.

The point 17 of signal 8 represents a point of time when no metal or product is in the detector cavity 7. The signal 8 is representative of the signal appearing on one input coil 13, which remains the same regardless of the signal on the other input coil 14. As metal enters the location in the detector cavity 7 and approaches the first input coil 13, the magnitude of signal 8 changes and has an amplitude modulation envelope peak 18 which corresponds to the metal object passing between oscillator coil and coil 13. This is followed by a second amplitude modulation envelope peak 19 attributable to signal 24 which corresponds to the metal object passing between oscillator coil and coil 14. The time difference between the envelope peaks 18 and 19 along axis 15 indicates the absolute frequency of the amplitude modulation, which is dependent on the parameters mentioned previously. The closer the coils 13 and 14 are to the center of the cavity 7, and hence to the oscillator coil 10 which resides at the center of the cavity 7, the higher the frequency of the amplitude modulation due to the shorter period of time needed for passage of the object over the coils 13 and 14.

If metal resides at the aperture center 20, the magnitude of the voltage induced in each input coil will be substantially equal, corresponding to the magnitude of, for example, point 21. Similarly, if the metal object is nearer to coil 13, the magnitude 22 of the voltage induced in coil 13 is greater than the magnitude 23 of the voltage induced in coil 14 at the same moment. In other words, the magnitude of the voltage induced in the nearer coil is measurably greater than the voltage induced in the more distant coil. Only metal residing in the center 20 of the cavity 7 will produce a ratio of voltages in coils 13 and 14 that is approximately 1:1.

By measuring the ratio of the voltages 8 and 24 induced in each coil, respectively, at the same instant, the position of the metal within the cavity can be calculated. A recognition that the signal produced on the input coils 13, 14 is the result of metal located within the cavity permits signals not corresponding to an "in cavity" location to be excluded as either the result of vibration or attributable to metal external to the metal detector 1. By monitoring the position of the each contaminant using the ratio method just described, the position of a second contaminant can be determined and its effect on the signal attributable to the first contaminant can be recognized.

Referring also to Figure 2, the composite signal produced by the combination of signals 8 and 24 can be divided into two separate components by appropriate signal processing. The reactive component includes signals 26 that are due primarily to case vibration and the movement of metal that is external to the cavity 7, as well as signals 27 attributable to large nonferrous electrically conducting items and signals 28 caused by the presence of small ferrous contaminants. Sensitivity to the detection of the small iron particles indicated by signal 28 is greatly increased if the vibration related signal 27 is eliminated, as is made possible by the technique of monitoring the ratios of the input coil signals 8 and 24.

Referring also to Figure 4, a first improved oscillator coil arrangement can be understood. The oscillator 11 is capable of delivering a current of approximately 11 amperes root mean square (11A RMS). When the oscillator coil 10 surrounds an aperture having dimensions of, for example, 350 mm by 150 mm, the coil inductance limits the actual coil current to 7.5A RMS at 300 kHz because the peak to peak voltage from the oscillator is also limited, in this case to 40v. An aperture size of 600 mm by 200 mm will create a current of only 3A, which represents a significant reduction in radiated magnetic flux from that which is theoretically available from the oscillator 10.

If two oscillator coils were to be placed side by side at the center of the cavity 7, no net gain in magnetic flux would be achieved because of the cross coupling of the magnetic fields. Therefore, the present invention utilizes two oscillator coils 29 and 30 which are spaced apart a sufficient distance 40 to permit the generation of largely separate magnetic fields. The input coils 13 and 14 reside outside of the volume defined by the oscillator coils 29 and 30, the input coils being connected to input signal processing circuitry 42. The optimum spacing between coils 29 and 30 is approximately half the distance 41 between the input coils 13 and 14. The two oscillator coils 29 and 30 are wound in parallel to create a twin coil 31 which is fed by oscillator leads 20 and 21. The coils 29 and 30 may be arranged so that their fields are either additive or in phase opposition. The total current drawn by the combined twin coil 31 is substantially greater than a single coil having the same dimensions. For an aperture size of 600 mm by 200 mm, the current increases from approximately 3A for a single coil to approximately 5A for the twin coil 31. The radiated magnetic flux is directly proportional to the current drain, the increased flux thereby causing the absolute magnitude of the peak signals 18 and 19 to increase, thereby simplifying their detection and measurement. Further, because each input coil 13, 14 is physically closer to its adjacent oscillator coil 29 and 30, respectively, the signal to noise ratio is further improved. In theory, the overall net gain achieved with the twin coil 31 is approximately 100% greater than the single oscillator coil configuration. This gain improvement translates into detection of metal particles that are approximately 25% smaller. Table I compares the expected performance of the present arrangement with the previous single oscillator coil method for an actual metal detector.

**Table I**

| Number of Oscillator Coil Windings | Peak Detector Signal Readings For The Given Contaminant Size and Type | | |
|---|---|---|---|
| | 1 mm Fe | 1.5 mm NFe | 2.0 mm SS |
| One | 360 | 280 | 385 |
| Two | 500 | 480 | 560 |

Table I shows that the peak reading produced by the twin oscillator coil arrangement produces significantly higher peak detector readings. In particular, the improvement afforded by the dual coil system of the present invention shows an improvement factor of 1.38 for Fe (Iron), 1.71 for NFe (Nickel and Iron) and 1.45 for SS (Stainless Steel).

Referring also to Figure 5, a second improved oscillator coil configuration can be understood. A relatively smaller oscillator coil such as would be associated with a relatively smaller aperture will have a relatively smaller value of inductance. The small inductance value necessarily means that the oscillator coil will draw a relatively greater current. Since the oscillator 11 cannot deliver more than 11A RMS, the driving voltage delivered by the oscillator 11 to the oscillator coil 10 must be limited in order to prevent excessive current demand. A typical standard sized oscillator coil may have a potential difference of 40 volts peak to peak (40Vp-p), whereas a smaller dimensioned oscillator coil may permit an oscillator voltage of only 10Vp-p.

The improved oscillator coil assembly 32 is constructed to include two separate oscillator coils 33 and 34, which are seen to be wound in series by the arrangement of the input leads 20 and 21. The coils 33 and 34 may be arranged so that their fields are either additive or in phase opposition. The typical theoretical improvement in the radiated magnetic flux is approximately 3:1, which increases to approximately 4:1 if the coils 33 and 34 are placed relatively close to the center of the cavity 7. Alternatively, for a given voltage, the current could be reduced by a factor of 4:1 if the original level of magnetic flux is to be maintained. However, since the current drain has been reduced by a factor of four, the voltage produced by oscillator 11 can be increase by a factor of four without exceeding the maximum permissible current drain, thereby permitting an increase of 4:1 in the radiated magnetic flux.
In practice, the actual improvement in magnetic flux is often limited to about 2.5:1 due to the proximity of the case 2.

The same 2.5:1 flux improvement ratio can also be achieved by placing each of the two oscillator coils 33 and 34 relatively closer to their adjacent input coil 13 and 14, respectively. This increased spacing between the oscillator coils 33 and 34 cause them to act substantially independently and behave as two inductors in a series circuit. The net inductance increase is therefore 2:1 which corresponds to a doubling of the radiated magnetic flux when the voltage of oscillator 11 is doubled. However, a metal object passing close to input coil 13, for example and its associated oscillator coil 33 will cause a minute change in the oscillator voltage across coil 33. The change in oscillator voltage causes a corresponding change in the magnitude of the current drawn from the oscillator 11, the change being perceived or forwarded to the other oscillator coil 34 since the two coils 33 and 34 are wound in series. The result of the voltage and current change is to produce an additive signal which creates a potential flux improvement of approximately 2.5:1. A radiated flux improvement of 2.5:1 corresponds to a decrease in size of the minimum detectable contaminant of approximately 35%.

Once the flux density of the radiated magnetic field has been selected based on the dimensions of apertures 6 and 9, the shape of the resultant magnetic field may be controlled. Referring also to Figure 6, the cavity 7 is seen to be surrounded by oscillator coil 10 and input coils 13 and 14. A first method of controlling the shape of the radiated field is to place conductive flux plates 36 and 35 adjacent to and completely encircling the apertures 6 and 9, respectively. The flux plates 35 and 36 are formed of a conductive material such as metal and are placed in regions of the cavity 7 in which the magnetic field is to be excluded. The magnetic field is not actually absorbed by the flux plates 35 and 36, but rather serve to repel the magnetic field, concentrating the field toward the central interior regions of the cavity 7 and thereby increasing the flux density in the region of the cavity 7 that is most likely to be occupied by the product under test.

A second method of shaping the radiated electromagnetic field is by means of a flux concentrator 37, which is formed of a ferrite slab, sheet or block. The flux concentrator 37 is placed adjacent to, but insulated from, the coils 10, 13, and 14, preferably extending as a continuous mass that overlies a portion of each coil. The effect of the flux concentrator 37 is to increase the magnetic flux in the region near the concentrator 37. Therefore, the concentrator 37 is typically placed so as to overlie a central region of the cavity 7 so that magnetic flux will be increased near the central region of cavity 7. Since the radiated magnetic field has a finite total flux, the increase in the flux density near the concentrator 37 necessarily reduces the flux density in regions displaced from the flux concentrator 37.

The flux concentrator 37 has the effect of increasing the inductance of the oscillator coil 10. Since the inductance may be defined as the magnetic flux produced per ampere of current, the magnetic flux produced by a given current necessarily increases as the inductance is increased. The increased magnetic flux in the region surrounding the coils 10, 13 and 14 translates into greater signal amplitudes produced by input coils 13 and 14 for a given field disturbance, such as would be caused by the passage of a metallic object through the cavity 7. The flux concentrator 37 must be mounted within cabinet 2 in a secure manner that will preclude any vibration of concentrator 38. Further, the ferrite material cannot have a permeability value that is so high as to significantly detune the oscillator coil frequency with changes in temperature. In order for the net detuning effect to be acceptably small, the improvement in signal gain due to the concentrator 37 cannot exceed a ratio of approximately 2:1, which corresponds to a size reduction of the smallest detectable contaminant by approximately 25%.

The foregoing improvements embodied in the present invention are by way of example only. Those skilled in the metal detecting field will appreciate that the foregoing features may be modified as appropriate for various specific applications without departing from the scope of the claims.

## Claims

1. A metal detector, comprising:
(a) a radio frequency oscillator;
(b) an oscillator coil, the coil being electrically interconnected to the oscillator so as to emit a magnetic field in a region surrounding the oscillator coil;
(c) a first input coil residing within the magnetic field, the first input coil generating a first signal in response to a disturbance of the magnetic field;
(d) a second input coil residing within the magnetic field, the second input coil generating a second signal in response to a disturbance of the magnetic field; and
(e) a signal processor, the signal processor measuring a ratio of the first signal and the second signal so as to determine a physical location of an item causing the disturbance of the magnetic field.

2. The metal detector according to claim 1, wherein the signal processor records a first peak attributable to the first signal and the signal processor records a second peak attributable to the second signal, the signal processor determining a direction of travel of the item causing the disturbance of the magnetic field.

3. The apparatus according to claim 1, wherein the metal detector further comprises:
(a) a case, the case housing the oscillator, the oscillator coil, the first and second input coils, and the signal processor;
(b) a cavity, the cavity residing within the case, the cavity being dimensioned to house a product while being examined for metal contaminants;
(c) a first aperture formed within the case and permitting the product to enter the cavity;
(d) a second cavity, the second cavity being formed within the case and permitting the product to exit the cavity; and
(e) a conveyor, the conveyor transporting the product through the cavity

4. An apparatus according to claim 1, wherein the signal processor associates a disturbance of the magnetic field with a metallic item when the item is determined to reside within the cavity.

5. An apparatus according to claim 1, wherein the signal processor excludes as a potential metallic contaminant an item causing a disturbance of the magnetic field when the disturbance is attributable to a metallic item residing outside of the cavity.

6. An apparatus according to claim 1, wherein the signal processor separates the first signal into a resistive component and a reactive component, and the signal processor separates the second signal into a resistive component and a reactive component.

7. The apparatus of claim 6, further comprising a flux concentrator, the flux concentrator being mounted within the case so as to be adjacent to the cavity, the flux concentrator increasing inductance of the oscillator coil.

8. The apparatus of claim 8, wherein the oscillator coil is formed as first and second adjacent oscillator coils, the first and second oscillator coils being interconnected in a parallel relationship.

9. The apparatus of claim 8, wherein the oscillator coil is formed as first and second adjacent oscillator coils, the first and second oscillator coils being interconnected in a series relationship.

10. A metal detector having a reduced metal free zone, comprising:
(a) an oscillator;
(b) an oscillator coil, the coil being electrically interconnected to the oscillator so as to emit a magnetic field in a region surrounding the oscillator coil;
(c) a first input coil residing within the magnetic field, the first input coil generating a first signal in response to a disturbance of the magnetic field;
(d) a second input coil residing within the magnetic field, the second input coil generating a second signal in response to a disturbance of the magnetic field; and
(e) an input coil voltage monitor, the voltage monitor being electrically interconnected to the first and second input coils, the voltage monitoring calculating an instantaneous ratio between a voltage amplitude of the first signal and a voltage amplitude of the second signal so as to determine a physical location of an item causing a disturbance of the magnetic field.

11. A method of detecting metal, comprising the steps of:
(a) radiating an magnetic field;
(b) simultaneously monitoring a voltage induced by a disturbance of the magnetic field from a first position and a second position; and
(c) calculating a ratio of voltage measured at the first position and the second position; and
(d) determining a location of an item causing the disturbance of the magnetic field based on the ratio of current at each location.

12. The method of claim 17, further comprising the steps of:
(a) placing a product under test within a cavity;
(b) determining if the item causing the disturbance to the magnetic field is located within the cavity; and
(c) categorizing the item as a metallic contaminant when the item is located within the cavity.
